# FASCICULE DE BREVET EUROPEEN

(11) **EP 2 729 978 B1**
(45) Date de publication et mention de la délivrance du brevet: **22.04.2015**
(21) Numéro de dépôt: 12734994.2
(22) Date de dépôt: 26.06.2012
(51) Int. Cl.: H01M 2/16, H01M 4/58, H01M 10/052, B01D 69/02

(54) **ACCUMULATEUR LITHIUM/SOUFRE**
LITHIUM-/SCHWEFELAKKUMULATOR
LITHIUM/SULPHUR ACCUMULATOR

(30) Priorité: 05.07.2011 FR 1156054
(43) Date de publication de la demande: 14.05.2014
(73) Titulaire: Commissariat à l'Énergie Atomique et aux Énergies Alternatives, 75015 Paris (FR)
(72) Inventeur: BARCHASZ, Céline, 38600 Fontaine (FR); PATOUX, Sébastien, 38500 Saint Nicolas de Macherin (FR); SI LARBI, Grégory, 38590 Sillans (FR)
(74) Mandataire: Cabinet Laurent & Charras
(86) Numéro de dépôt international: PCT/FR2012/051461
(87) Numéro de publication internationale: WO 2013/004945

(56) Documents cités:
- WO-A1-2009/032313
- WO-A1-2009/044227
- GB-A- 2 424 511
- JP-A- 2003 142 064
- JP-A- 2004 335 159
- JP-A- 2010 199 083
- US-A1- 2005 042 503

## Description

### DOMAINE DE L'INVENTION

La présente invention concerne un accumulateur lithium/soufre comprenant un séparateur d'électrodes imbibé d'un excès d'électrolyte.

Le domaine d'utilisation de l'invention se rapporte particulièrement au stockage de l'énergie électrique.

### ETAT ANTERIEUR DE LA TECHNIQUE

Les accumulateurs ou batteries au lithium sont couramment utilisés comme source d'énergie autonome, en particulier dans les équipements portables. Eu égard à leur densité d'énergie massique et volumique (160 à 240 Wh/kg ; 300 à 600 Wh/l), ils tendent à remplacer progressivement les accumulateurs nickel-cadmium (Ni-Cd) et nickel-hydrure métallique (Ni-MH). En outre, ces systèmes présentent une durée de vie pouvant atteindre 500, voire 1000 cycles.

Les batteries lithium ion, ou Li-ion, présentent une structure contenant au moins une cellule unitaire comprenant deux électrodes disposées de part et d'autre d'un séparateur (organique ou inorganique) imbibé d'un électrolyte comprenant un sel de lithium. Les deux électrodes, l'une positive (typiquement en oxyde de cobalt lithié LiCoO₂) et l'autre négative (graphite), sont toutes les deux montées sur un collecteur de courant métallique.

De nombreux travaux ont également porté sur les accumulateurs lithium/soufre (Li/S) dans lesquels l'électrode positive comprend un matériau soufré. Le développement de ces accumulateurs Li/S repose notamment sur les propriétés du soufre élémentaire qui présente une densité d'énergie massique théorique de 2600 Wh.kg⁻¹ de Li₂S.

Le soufre est peu onéreux, naturellement abondant, et présente un faible impact environnemental. Il constitue donc un matériau d'électrode positive très prometteur pour ces accumulateurs Li/S dans lesquels le lithium réagit avec le soufre élémentaire (S₈) selon la réaction suivante :

16 Li + S₈ → 8 Li₂S

La différence de potentiel créée est d'environ 2,1 V (vs Li⁺/Li), pour une capacité spécifique théorique de 1675 mAh.g⁻¹ de soufre.

Cependant, le soufre est un matériau isolant généralement soluble dans les électrolytes organiques des accumulateurs. En outre, sa dissolution peut corroder l'électrode négative au Li et entrainer ainsi une importante autodécharge des accumulateurs Li/S.

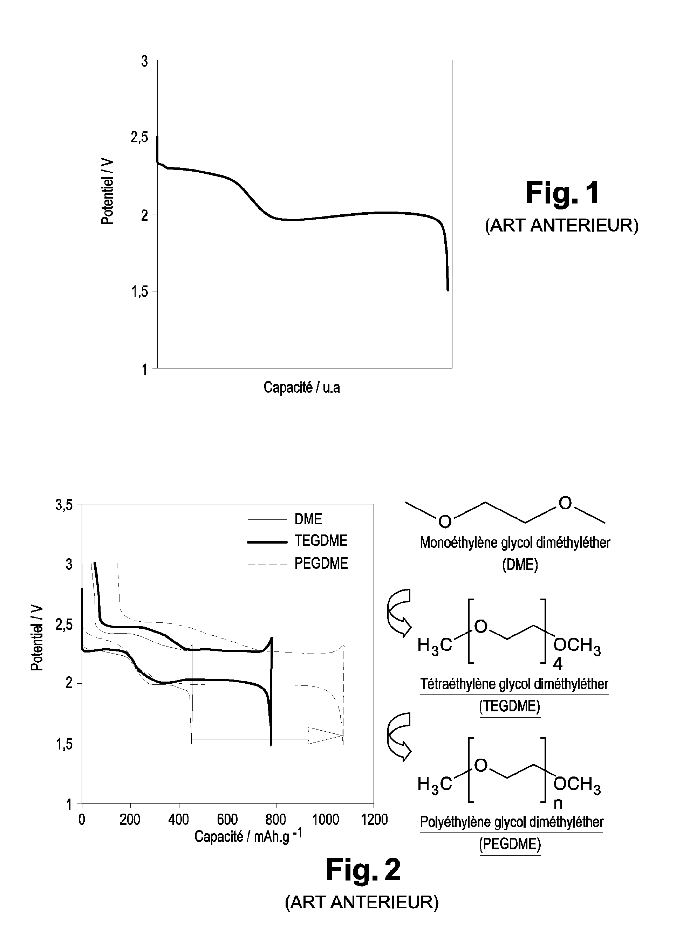

Par ailleurs, au cours de la décharge d'un accumulateur Li/S (figure 1), le soufre élémentaire (S₈) est réduit par le lithium métal pour former des intermédiaires polysulfures de lithium de formule générale Li₂Sₙ (2 < n < 8). Il s'agit plus particulièrement de chaines comprenant des atomes de soufre, chargées négativement, associées à des ions lithium, et solubles dans les électrolytes organiques. Les produits présents en fin de réduction du soufre élémentaire incluent également Li₂S₂ et Li₂S. Ces composés, peu ou non solubles dans l'électrolyte, peuvent précipiter à l'électrode négative. Eu égard à leurs propriétés d'isolants électroniques, ils peuvent donc entrainer la passivation de l'électrode négative, son isolation électrique, et la fin de la décharge.

Les intermédiaires polysulfures de lithium, Li₂Sₙ, sont également susceptibles de réagir avec l'électrode négative (Li). Ils favorisent donc également l'autodécharge. En outre, ils sont responsables de la mise en place d'un mécanisme navette qui se produit en charge, et qui entraine la dégradation des performances de l'accumulateur, notamment en termes d'efficacité coulombique. En revanche, le produit de décharge Li₂S est insoluble dans l'électrolyte, et isolant électronique. Sa précipitation en fin de décharge entraine la passivation de la surface des électrodes, qui deviennent alors inactives. Ainsi, la capacité d'un accumulateur Li/S est généralement de l'ordre de 300 à 1000 mAh.g⁻¹ de soufre alors que la capacité théorique est de 1675 mAh.g⁻¹ de soufre.

La précipitation de ces composés soufrés dépend de la nature et de la quantité de l'électrolyte. En effet, la nature du solvant de l'électrolyte peut affecter la capacité massique de l'accumulateur lithium/soufre (figure 2). Ainsi, l'influence de la nature du solvant sur les performances électrochimiques se traduit généralement par un allongement du second plateau de décharge et donc une augmentation de la capacité de décharge. Cet effet résulte de la solvatation des espèces polysulfurées de lithium. Par exemple, les solvants de type polyéthylène glycol diméthyléther (PEGDME) possèdent une chaine éthérée relativement longue, qui permet de solubiliser de manière importante les polysulfures de lithium à chaine courte, limitant ainsi leur précipitation. En outre, la quantité d'électrolyte et donc de solvant à mettre en oeuvre pour préparer un accumulateur au lithium dépend de la structure géométrique de ce dernier. En effet, dans le cas d'une pile bouton contenant une seule cellule unitaire (constituée d'une électrode positive au soufre, d'une électrode négative de lithium métal, et d'un unique électrolyte liquide organique supporté par un séparateur intercalé entre les deux électrodes), l'électrolyte est introduit en excès. Cet excès peut être de l'ordre de 500%, de manière à combler les espaces vides. En général, l'épaisseur totale des composants avoisine 400 µm alors que la pile bouton présente une épaisseur totale de 3 mm environ. Cette différence est compensée par la présence d'un ressort, assurant le bon contact entre tous les composants et connectant électriquement le collecteur de l'électrode négative et le capot supérieur. Le volume de ce type d'accumulateur est donc important, en rapport à la matière engagée réellement dans les électrodes et l'électrolyte. L'excès d'électrolyte permet de palier les éventuelles pertes d'électrolyte dans le volume mort, et les problèmes de mouillage incomplet des électrodes et du séparateur.

En revanche, dans le cas d'accumulateurs Li-ion de forte densité d'énergie ou de haute tension, se présentant sous forme cylindrique, prismatique ou d'empilements de plusieurs cellules unitaires, la quantité d'électrolyte est ajustée de manière à assurer le mouillage complet des électrodes et du séparateur, sans pour autant ajouter de masse inutile dans l'accumulateur. En effet, une quantité superflue d'électrolyte n'améliorerait pas les performances de l'accumulateur, en termes de capacité, potentiel ou réponse en puissance. En revanche, elle augmenterait la masse réelle de l'accumulateur, et, à performances électrochimiques identiques, diminuerait ainsi les densités d'énergie volumique et massique. Il est donc nécessaire de contrôler et d'optimiser la quantité et le nombre de chaque composant introduit dans la batterie. Typiquement, la quantité d'électrolyte introduit dans un accumulateur Li-ion correspond à la quantité nécessaire au mouillage des électrodes et des séparateurs, majorée d'environ 10 % pour pallier les éventuels interstices présents dans la batterie (autres que ceux contenus dans le séparateur et les électrodes).

L'étude des composants de batterie du type pile-bouton met en oeuvre une quantité d'électrolyte en excès, de manière à pallier le volume mort de la cellule. En revanche, dans le cas de cellules mises en série, les volumes et masses superflus sont réduits au maximum, et l'électrolyte est introduit au plus juste.

Comme déjà indiqué, les accumulateurs Li/S présentent de nombreux avantages et inconvénients, notamment en ce qui concerne la précipitation des composés polysoufrés, la passivation de l'électrode ou la densité d'énergie massique.

En raison de la dissolution des espèces produites au cours de la décharge puis de leur précipitation, le mécanisme de décharge des accumulateurs Li/S diffère de celui des technologies Li-ion conventionnelles. La quantité et la nature de l'électrolyte introduit influent directement sur les performances électrochimiques. Le mode de préparation classique des batteries au lithium n'est donc pas applicable aux accumulateurs Li/S. Un simple séparateur d'accumulateurs Li-ion, de type séparateur microporeux de polyoléfines, rempli avec un excès d'électrolyte de 10 à 20 %, ne s'avère pas satisfaisant dans le cas d'un système Li/S. Ces séparateurs, très fin et moyennement poreux, ne permettent pas d'accueillir une quantité d'électrolyte suffisante pour le bon fonctionnement du processus redox des accumulateurs Li/S.

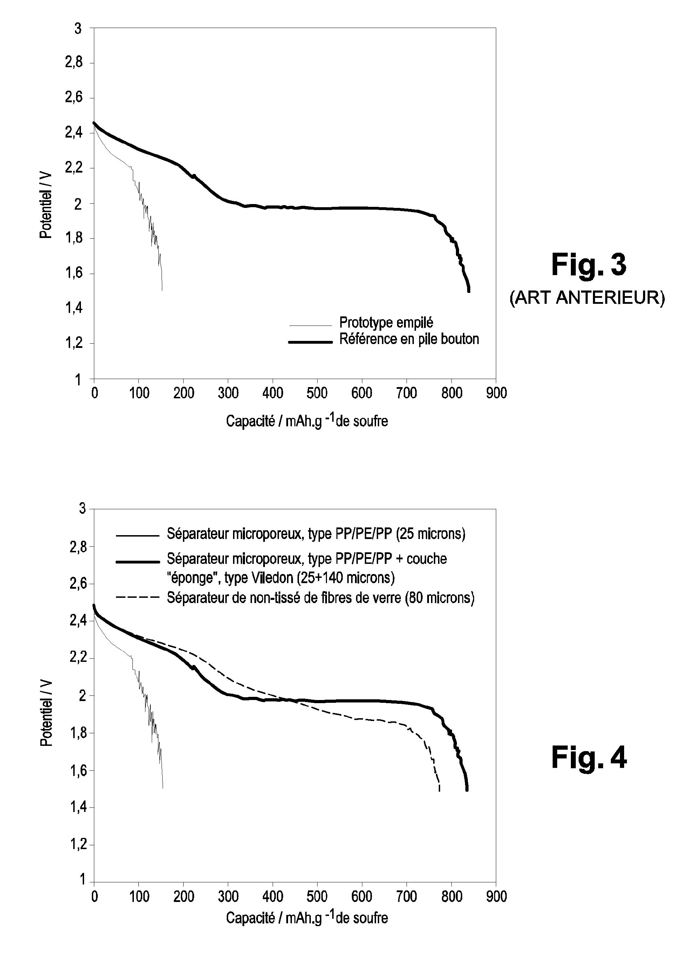

Le développement des accumulateurs Li-ion conventionnels est généralement réalisé en cellule de type piles boutons avant passage à l'échelle supérieure par transposition et ajustement de la géométrie et des composants initialement développés en cellule unitaire. En revanche, cela n'est pas envisageable dans le cas des accumulateurs Li/S en raison des phénomènes de précipitation/passivation. En effet, comme illustré sur la figure 3, de mauvaises performances électrochimiques seraient alors obtenues pour un accumulateur Li/S directement transposé d'une architecture pile bouton.

Le document US2005042503 divulgue un accumulateur lithium/ soufre comprenant un séparateur ayant une porosité comprise entre 20 et 50% et l'électrolyte liquide est injecté dans la batterie.

Le Demandeur a mis au point un accumulateur lithium/soufre dont le séparateur d'électrodes permet de résoudre les problèmes techniques de l'art antérieur concernant la passivation des électrodes par précipitation des espèces soufrées, tout en maintenant une densité d'énergie massique importante.

### EXPOSE DE L'INVENTION

La présente invention propose notamment d'optimiser le séparateur d'électrodes dans un accumulateur lithium/soufre.

Plus précisément, la présente invention concerne un accumulateur au lithium/soufre (Li/S) selon l'objet de la revendication 1 comportant au moins une cellule unitaire comprenant :
- une électrode négative ;
- un séparateur d'électrodes comprenant un matériau imprégné d'un électrolyte, ledit matériau comprenant au moins un non tissé, et présentant une porosité comprise entre 50 et 96 %, et une épaisseur comprise entre 50 et 200 micromètres, et plus avantageusement encore entre 50 et 100 micromètres ;
- une électrode positive.

Le séparateur d'électrodes permet non seulement d'assurer la séparation électrique de ces dernières, mais aussi de supporter l'électrolyte de l'accumulateur lithium/soufre notamment lorsqu'il se présente sous forme liquide.

Par porosité, on entend le pourcentage de vide défini par le rapport (1 - [(volume du matériau pour séparateur) / (volume total)]). Le volume du matériau pour séparateur correspond au volume occupé par le matériau constituant le matériau pour séparateur. Le volume total représente le volume du matériau pour séparateur et le volume des pores compris dans le matériau pour séparateur.

Typiquement, la porosité du matériau pour séparateur d'électrodes est comprise entre 50 et 96 %. Le matériau pour séparateur d'électrodes présente une épaisseur permettant d'assurer une bonne isolation des électrodes, malgré sa porosité. En effet, un séparateur d'électrodes très poreux peut engendrer des courts-circuits.

Selon un mode de réalisation avantageux, la porosité du matériau pour séparateur, et du au moins un non tissé du matériau pour séparateur, peut être comprise entre 50 et 90 %.

Toutefois, selon un mode de réalisation particulier, le au moins un non tissé du matériau de séparateur d'électrodes peut présenter une épaisseur inférieure à 50 micromètres. Le matériau pour séparateur d'électrodes comprend alors au moins deux non-tissés dont la porosité globale est comprise entre 50 et 96 % et dont l'épaisseur globale est comprise entre 50 et 200 micromètres. En d'autres termes, le matériau pour séparateur peut comprendre au moins un non-tissé présentant une épaisseur inférieure à 50 micromètres et/ou une porosité inférieure à 50%.

De manière avantageuse, le matériau pour séparateur d'électrodes peut comprendre au moins un non-tissé de fibres choisies dans le groupe comprenant les fibres de verre, de polyéthylène téréphtalate (PET), de polyoléfines (polypropylène (PP), polyéthylène (PE)), de poly(vinyl alcool) (PVA), de polyamide (PA), de poly(tétrafluoroéthylène) (PTFE), de poly(vinyl chloride) (PVC), de polyvinylidine fluoride (PVdF). Selon un mode de réalisation particulier, le non tissé peut comprendre un mélange de fibres.

Le matériau pour séparateur d'électrodes peut notamment, et de manière non limitative, comprendre au moins un non-tissé choisi dans le groupe comprenant :
- un bicouche non tissé de polyoléfine/nanofibres de PVA ;
- un tricouche non tissé de polyoléfine/nanofibres de PVA/non tissé de polyoléfine ;
- des nano fibres de PVA ;

Selon un mode de réalisation particulier, le matériau pour séparateur d'électrodes peut comprendre plusieurs non tissés pouvant être identiques ou différents. Dans ce cas, l'homme du métier saura choisir les combinaisons adaptées afin de maintenir une densité d'énergie massique importante.

Selon l'invention, l'électrolyte est introduit en excès, et comprend au moins un sel de lithium, la quantité d'excès d'électrolyte représentant 20 à 200 % par rapport à la quantité d'électrolyte assurant le mouillage des électrodes et du séparateur.

La quantité d'électrolyte assurant le mouillage des électrodes et du séparateur correspond à la somme du volume des pores du séparateur, et du volume des pores des électrodes positives et négatives. Cet excès d'électrolyte correspond donc à une différence en volume par rapport au volume total des pores du séparateur et des pores des électrodes.

L'accumulateur Li/S selon la présente invention peut se présenter sous la forme d'un empilement de cellules unitaires, sous forme cylindrique (bobine), ou prismatique. Il est avantageusement de type empilé.

Selon un mode de réalisation particulier, l'électrolyte est liquide, et supporté par le séparateur d'électrode. Il peut avantageusement comprendre au moins un solvant pouvant être organique ou aqueux (eau).

L'électrolyte comprend en outre au moins un sel de lithium, pouvant avantageusement être choisi dans le groupe comprenant :
- le LiN(CF₃SO₂)₂ (lithium bis[(trifluoromethyl)sulfonyl]imide ou LiTFSI),
- le LiCF₃SO₃ (lithium trifluoromethane sulfonate ou LiTf ou Li-Triflate),
- le LiClO₄,
- le LiAsF₆,
- le LiPF₆,
- le LiBF₄,
- le LiI,
- le LiB(C₂O₄)₂ (lithium bis(oxalato)borate ou LiBOB),
- le LiN(CF₃CF₂SO₂)₂ (lithium bis(perfluoroethylsulfonyl)imide ou LiBETI),
- le LiNO₃,
- le LiOH (hydroxyde de lithium).

La concentration de l'électrolyte en sel de lithium peut avantageusement être comprise entre 0,1 et 5 mol.l⁻¹ de préférence entre 0,8 et 1,5 mol.l⁻¹.

Le sel de lithium est avantageusement soluble dans le solvant ou dans le mélange de solvants de l'électrolyte. Dans le cas d'un électrolyte aqueux, les sels de type LiNO₃ et LiOH sont dissouts dans l'eau.

Le solvant de l'électrolyte organique peut être avantageusement choisi dans le groupe comprenant :
- les carbonates de type PC (carbonate de propylène), DMC (diméthyle carbonate), EC (carbonate d'éthylène), DEC (diéthyle carbonate) ;
- les éthers de type DIOX (1,3-dioxolane), THF (tetrahydrofurane), DME (1,2-dimethoxyethane) ou plus généralement la famille des glymes de formule CH₃O-(CH₂CH₂O)ₙ-CH₃ (n = 1-10), tels que les polyéthylène glycol diméthyléther (PEGDME).

L'électrolyte peut également comprendre au moins un additif pouvant être un additif passivant, ou sécuritaire, tel que LiNO₃ à hauteur de 5 à 10% en volume dont la fonction est de protéger une électrode de Li métal.

Afin d'obtenir une densité d'énergie massique optimale, tout en prenant en compte les exigences d'un accumulateur Li/S, il s'agit de combiner un séparateur poreux avec un excès d'électrolyte. Alors que l'excès d'électrolyte est ajouté de manière contrôlée, le séparateur doit également présenter une porosité spécifique, tout en étant le plus léger possible. La porosité du séparateur permet ainsi l'imprégnation d'un excès d'électrolyte, à hauteur de 20 à 200% en excès d'électrolyte, préférentiellement entre 50 et 100% d'excès par rapport à la quantité d'électrolyte assurant le mouillage des électrodes et du séparateur.

L'excès d'électrolyte est déterminé en fonction de la quantité nécessaire au mouillage des électrodes et du séparateur. L'homme du métier saura donc, sans ambigüité, ajuster la quantité d'électrolyte selon le séparateur et la surface des électrodes, de manière à notamment ne pas trop diminuer les densités d'énergie massique et volumique de l'accumulateur.

Dans l'accumulateur Li/S selon la présente invention, l'électrode positive est avantageusement composée d'au moins un matériau actif d'électrode soufré choisi dans le groupe comprenant le soufre élémentaire ; le sulfure de lithium (Li₂S) ; les polysulfures de lithium de formule générale Li₂Sₙ, n étant compris entre 2 et 8 ; les polysulfures organiques de formule générale R₂Sₙ (R étant une chaine alkyle linéaire pouvant comprendre de 2 à 10 atomes de carbone, et n étant compris entre 2 et 50) ; les composés organo-soufrés de type poly(disulfure de carbone (C₂Sₓ)ₙ avec x compris entre 2,5 et 50, et n supérieur ou égal à 2 ; ainsi que tout polymère disulfure présentant un enchainement de liaisons S-S pouvant être cassées lors du cycle de décharge de l'accumulateur Li/S, et reformées lors du cycle de charge.

En outre, l'électrode positive est avantageusement déposée sur un collecteur de courant choisi en fonction de la stabilité du matériau actif d'électrode positive. Le collecteur de courant de l'électrode positive peut notamment être un feuillard de cuivre ou d'alliages de cuivre, d'aluminium ou d'alliages d'aluminium, de nickel, d'acier inoxydable.

Typiquement, le collecteur de courant de l'électrode positive est constitué d'un feuillard d'aluminium de 20 micromètres d'épaisseur.

Préférentiellement, l'électrode positive est constituée de soufre élémentaire, conférant à l'accumulateur Li/S une densité d'énergie plus importante, de par sa grande capacité massique de stockage. En outre, dans le but d'améliorer sa conductivité électronique, l'électrode positive peut comprendre un additif conducteur électronique, de type noir de carbone, nanotubes ou fibres de carbone, particules métalliques ou polymère conducteur.

D'autre part, l'électrode négative peut être avantageusement composée en au moins un matériau actif d'électrode choisi dans le groupe comprenant :
- le lithium métal ;
- les alliages du lithium métal tels que LiAl ;
- les composés d'insertion du lithium, tels que le graphite.

Selon un mode de réalisation particulier, il peut également s'agir d'alliages à base d'étain ou de silicium.

En ce qui concerne le collecteur de courant de l'électrode négative, celui-ci est choisi en fonction de la stabilité du matériau actif d'électrode négative. Il peut notamment être choisi dans le groupe comprenant les feuillards de cuivre ou d'alliages de cuivre, d'aluminium ou d'alliages d'aluminium, de nickel, d'inox.

Typiquement, celui-ci est constitué d'un feuillard de cuivre de 10 micromètres d'épaisseur. Préférentiellement, l'électrode négative est constituée de lithium métal, conférant à l'accumulateur Li/S une densité d'énergie importante, de par sa grande capacité massique de stockage.

L'homme du métier saura adapter la nature aqueuse ou organique de l'électrolyte également en fonction de l'électrode. En effet, il va de soi qu'un électrolyte aqueux n'est pas compatible avec une électrode négative en lithium métal.

Selon un mode de réalisation préféré, l'accumulateur Li/S de la présente invention peut comporter au moins une cellule unitaire comprenant :
- une électrode négative en lithium métallique déposée sur un feuillard de cuivre ;
- un séparateur d'électrodes non-tissé dont la porosité est comprise entre 50 et 96 %, imprégné d'un excès d'électrolyte compris entre 30 et 100 % ;
- une électrode positive en soufre élémentaire, déposée sur un feuillard en aluminium ;
- l'électrolyte comprenant du LiTFSI dissout dans un mélange 50/50 de PEGDME/DIOX.

De manière générale, l'accumulateur Li/S selon la présente invention peut être utilisé dans le cadre du stockage de l'énergie électrique.

L'invention et les avantages qui en découlent ressortiront mieux des figures et exemples suivants donnés afin d'illustrer l'invention et non de manière limitative.

### DESCRIPTION DES FIGURES

La figure 1 illustre la courbe de décharge d'un accumulateur lithium/soufre conventionnel.
La figure 2 représente le graphe correspondant à la capacité massique d'un accumulateur lithium/soufre de l'art antérieur, en fonction de la nature du solvant de l'électrolyte.
La figure 3 illustre les performances électrochimiques, en termes de capacité de stockage massique d'un accumulateur empilé Li/S, et celles d'une pile bouton Li/S, réalisées selon le même mode de réalisation de l'art antérieur.
La figure 4 représente la capacité de stockage massique de deux accumulateurs selon l'invention et d'un accumulateur conventionnel en fonction du potentiel.
La figure 5 représente la densité d'énergie massique de deux accumulateurs selon l'invention et d'un accumulateur conventionnel en fonction du potentiel.

### EXEMPLES DE REALISATION DE L'INVENTION

Les exemples présentés ci-après concernent la réalisation d'accumulateurs Li/S de type "empilé", par superposition de cellules unitaires comprenant :
- une électrode ;
- un séparateur d'électrodes imbibé d'un électrolyte comprenant un sel de lithium ;
- une électrode positive.

Chacun des accumulateurs comprend dix cellules formées par l'empilement d'un total de cinq électrodes positives bifaces, dix séparateurs et six électrodes négatives (quatre bifaces et deux monofaces).

### Electrode négative

L'électrode négative de ces cellules unitaires est constituée de lithium. Elle présente une épaisseur de 140 micromètres et une forme carrée de dimensions 4,15 cm * 4,15 cm. Une patte de cuivre de 10 micromètres d'épaisseur, servant à la collecte du courant, est en outre accrochée à l'électrode négative.

### Electrode positive

L'électrode positive biface de ces cellules unitaires est réalisée à partir d'une encre composée (en masse) de :
- 75% de soufre comme matière active (soufre élémentaire Refined® provenant de chez Aldrich) ;
- 10% de noir de carbone (Super P® provenant de chez Timcal) ;
- 5% de fibres de carbone (VGCF® provenant de chez Showa Denko) ;
- 10% de liant (difluorure de polyvinylidène ou PVdF provenant de chez Solvay) mis en solution dans la Nmethylpyrrolidone (NMP).

La quantité de NMP est ajustée pour atteindre la viscosité optimale permettant un dépôt facile du mélange 100 à 500% d'excès en masse par rapport à la matière solide introduite. L'encre est déposée par enduction à l'aide d'une racle micrométrique (dépôt de 500 micromètres d'épaisseur) sur un feuillard d'aluminium de 20 micromètres d'épaisseur. L'enduction est ensuite séchée à 55 °C pendant 24 heures sous air. L'encre est ensuite déposée de nouveau sur l'autre face du feuillard d'aluminium (dépôt de 500 micromètres). Cette nouvelle enduction est également séchée à 55 °C pendant 24 heures sous air. L'électrode biface est ensuite découpée en carré de dimensions 4 cm * 4 cm. Une patte collectrice de courant en aluminium est également utilisée en supplément, de manière à collecter le courant de chaque électrode positive. Il s'agit d'un collecteur biface pour deux électrodes.

### Séparateur

Les accumulateurs Li/S des exemples 1, 2, et de l'exemple comparatif présentés ci-après, se distinguent les uns des autres eu égard à la nature du séparateur d'électrodes.

Les matériaux utilisés pour préparer les séparateurs de courant sont les suivants :
- VILEDON® type FS 2206-14 (de chez Freudenberg) présentant une porosité de 55 %.
- Celgard®2325 (de chez Celgard) : non-tissé de polyoléfines (type polypropylène ou PP) présentant une épaisseur de 140 micromètres et une porosité de 39 % ;
- BERNARD DUMAS®, type 1C1755 (de chez Bernard Dumas) : non-tissé de fibres de verre, renforcé par des fibres de poly(éthylène téréphtalate) (PET) qui assurent une bonne tenue mécanique de la membrane, tout en permettant une porosité très importante. L'épaisseur de ce type de séparateur est généralement de 80 micromètres pour une porosité de 90 %.

**- Tableau 1 : Composition du séparateur et de l'électrolyte des accumulateurs**

| | Séparateur | | | Electrolyte^{(a)} | |
|---|---|---|---|---|---|
| Exemple | Composition | Epaisseur (µm) | Porosité | Solvant | Sel de lithium (Excès) |
| 1 | Celgard®2325 Viledon® | 25 140 | 39% 55% | PEGDME/DIOX (50/50) | LiTFSI (30 %) |
| 2 | Bernard Dumas® | 80 | 90 % | PEGDME/DIOX (50/50) | LiTFSI (30 %) |
| Exemple comparatif | Celgard®2325 | 25 | 39% | PEGDME/DIOX (50/50) | LiTFSI (30 %) |

| | | | | | |
|---|---|---|---|---|---|
| ^{(a)} sel de lithium (1 mol/L) en solution dans un mélange de solvants (PEGDME/DIOX) | | | | | |

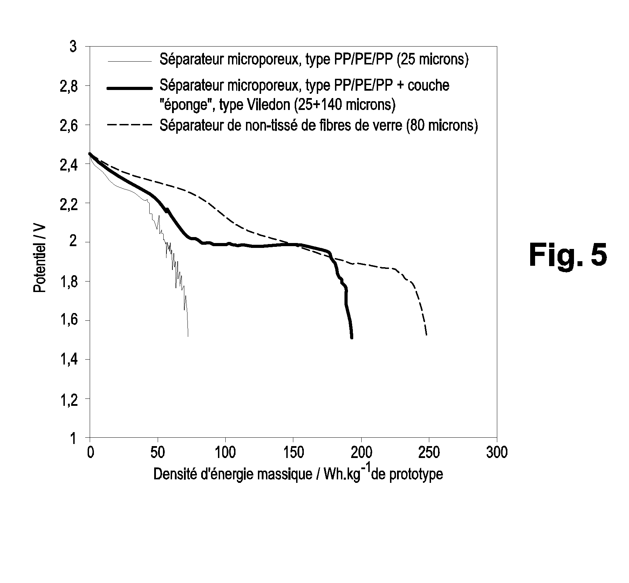

### Exemple 1 (invention, figures 4 et 5)

Le séparateur est un non-tissé Celgard® 2325 (PP/PE/PP), couplé à un non-tissé de polyoléfines, Viledon® (PP de 140 µm d'épaisseur), imbibé d'un électrolyte liquide à base du sel LiTFSI (1 mol.L⁻¹) en solution dans un mélange 50/50 en volume de PEGDME/DIOX (excès: 30 %).
- PP = polypropylène
- PE = polyéthylène
- PEGDME = polyéthylène glycol diméthyléther
- DIOX = 1,3-dioxolane
- LiTFSI = LiN(CF₃SO₂)₂, lithium bis[(trifluoromethyl)sulfonyl]imide

### Exemple 2 (invention, figures 4 et 5)

Le séparateur est un non-tissé de fibres de verre (Bernard Dumas®, type 1C1755), imbibé d'un électrolyte liquide à base du sel LiTFSI (1 mol.L⁻¹) en solution dans un mélange 50/50 en volume de PEGDME/DIOX (excès: 30 %).

### Exemple comparatif (figures 4 et 5) (art antérieur) :

Le séparateur est un non-tissé Celgard® 2325, imbibé d'un électrolyte liquide à base du sel LiTFSI (1 mol.L⁻¹) en solution dans un mélange 50/50 en volume de PEGDME/DIOX (Excès: 30 %).

### Performances électrochimiques des accumulateurs selon la présente invention

Les accumulateurs des exemples 1 et 2 présentent chacun une capacité de stockage massique (exprimée en fonction de la quantité de soufre comprise dans l'électrolyte, mAh par gramme de soufre) plus importante que celle d'un accumulateur selon l'art antérieur (exemple comparatif) dont le séparateur d'électrodes est constituée d'un non-tissé de polyoléfines dont la porosité est de 39 % (figure 4).

En effet, la capacité de stockage correspondant à l'accumulateur de l'exemple 1 (séparateur combinant un non-tissé de polyoléfines de 55 % de porosité et un non-tissé de polyoléfines de 39 % de porosité) avoisine les 850 mAh.g⁻¹ alors que celle correspondant à l'exemple comparatif n'est que de 170 mAh.g⁻¹. Il est également à noter que la capacité de stockage de l'accumulateur de l'exemple 2 (séparateur en non-tissé de fibres de verre de 90 % de porosité) est proche de 800 mAh par gramme de soufre.

En ce qui concerne la densité d'énergie massique, exprimée en Wh par kilogramme de cellules unitaires empilées, l'accumulateur selon l'exemple 2 présente de meilleurs résultats que celui de l'exemple 1, étant donné que le séparateur de l'exemple 2, constitué d'un non-tissé de fibres de verre de 80 micromètres d'épaisseur, est plus léger que le séparateur de l'exemple 1.

Ainsi, la densité d'énergie massique obtenue pour les accumulateurs des exemples 1 et 2 sont respectivement de l'ordre de 200 et 250 Wh.kg⁻¹. Ces valeurs sont bien supérieures à la densité massique de l'accumulateur selon l'exemple comparatif, 75 Wh.kg⁻¹.

L'utilisation d'un séparateur d'électrodes comprenant un non-tissé poreux permet d'améliorer non seulement la capacité de stockage massique de l'accumulateur mais aussi sa densité d'énergie massique.

En outre, l'utilisation d'un excès d'électrolyte permet d'obtenir une plus grande dissolution des espèces soufrées en fin de cycle de décharge par rapport aux séparateurs de l'art antérieur. Leur précipitation est ainsi retardée, de même que la passivation de l'électrode positive. La capacité de stockage par gramme de soufre peut ainsi être largement augmentée.

## Revendications

1. Accumulateur lithium/soufre comprenant au moins une cellule unitaire comprenant :
- une électrode négative ;
- un séparateur d'électrodes comprenant un matériau imbibé d'électrolyte, ledit matériau comprenant au moins un non tissé, et présentant une porosité comprise entre 50 et 96 % et une épaisseur comprise entre 50 et 200 micromètres ;
- une électrode positive ;
ledit électrolyte étant introduit en excès et comprenant au moins un sel de lithium, et la quantité d'excès d'électrolyte représentant 20 à 200 % par rapport à la quantité d'électrolyte assurant le mouillage des électrodes et du séparateur.

2. Accumulateur lithium/soufre selon la revendication 1, ***caractérisé* en ce que** l'électrode positive est composée d'au moins un matériau soufré choisi dans le groupe comprenant le soufre élémentaire ; le sulfure de lithium (Li₂S) ; les polysulfures de lithium de formule générale Li₂Sₙ, n étant compris entre 2 et 8) ; les polysulfures organiques de formule générale R₂Sₙ dans laquelle R est une chaine alkyle linéaire pouvant comprendre de 2 à 10 atomes de carbone, et n est compris entre 2 et 50 ; les composés organosoufrés de type poly(disulfure de carbone) ; ainsi que tout polymère disulfure présentant un enchainement de liaison S-S pouvant être cassée lors du cycle de décharge de l'accumulateur Li/S, et reformée lors du cycle de charge.

3. Accumulateur lithium/soufre selon l'une des revendications précédentes, ***caractérisé* en ce que** l'électrode négative comprend au moins un matériau actif choisi dans le groupe comprenant le lithium métal, les alliages du lithium métal, les composés d'insertion du lithium.

4. Accumulateur lithium/soufre selon l'une des revendications précédentes, ***caractérisé* en ce que** le sel de lithium de l'électrolyte est choisi dans le groupe comprenant le LiN(CF₃SO₂)₂ ; le LiCF₃SO₃ ; le LiClO₄ ; le LiAsF₆ ; le LiPF₆ ; le LiBF₄ ; le LiI ; le LiB(C₂O₄)₂ ; le LiN(CF₃CF₂SO₂)₂ ; le LiNO₃ ; ou le LiOH.

5. Accumulateur lithium/soufre selon l'une des revendications précédentes, ***caractérisé* en ce que** la quantité d'excès d'électrolyte introduit représente entre 50 et 100 % par rapport à la quantité d'électrolyte assurant le mouillage des électrodes et du séparateur.

6. Accumulateur lithium/soufre selon la revendication 1, ***caractérisé* en ce que** l'électrolyte comprend au moins un solvant choisi dans le groupe comprenant :
- les carbonates de type carbonate de propylène, diméthyle carbonate, carbonate d'éthylène, et diéthyle carbonate ;
- les éthers de type 1,3-dioxolane, tétrahydrofurane, 1,2-diméthoxyéthane ou plus généralement la famille des glymes de formule CH₃O-(CH₂CH₂O)ₙ-CH₃ n étant compris entre 1 et 10, tels que les polyéthylène glycol diméthyléther ;
- l'eau.

7. Accumulateur lithium/soufre selon l'une des revendications précédentes, ***caractérisé* en ce que** le matériau présente une porosité comprise entre 50 et 90%.

8. Accumulateur lithium/soufre selon l'une des revendications précédentes, ***caractérisé* en ce que** le matériau présente une épaisseur comprise entre 50 et 100 micromètres.

9. Accumulateur lithium/soufre selon l'une des revendications précédentes, ***caractérisé* en ce que** le non-tissé comprend des fibres choisies dans le groupe comprenant les fibres de verre ; de poly(éthylène téréphtalate) ; de polyoléfines telles que le polypropylène et le polyéthylène ; de poly(vinyl alcool) ; de polyamide ; de poly(tétrafluoroéthylène) ; de poly(vinyl chloride) ; de polyvinylidine fluoride ; et leurs mélanges.

## Patentansprüche

1. Lithium/Schwefel-Akkumulator mit mindestens einer Einzelzelle, Folgendes aufweisend:
- eine negative Elektrode;
- einen Elektrodenseparator umfassend ein mit Elektrolyt getränktes Material, wobei das Material mindestens ein Vlies umfasst und eine Porosität zwischen 50 und 96% und eine Dicke zwischen 50 und 200 Mikrometer aufweist;
- eine positive Elektrode;
wobei der Elektrolyt im Überschuss eingeführt ist und mindestens ein Lithiumsalz umfasst, und wobei die Elektrolytüberschussmenge 20 bis 200% gegenüber der Elektrolytmenge darstellt, die die Benetzung der Elektroden und des Separators sicherstellt.

2. Lithium/Schwefel-Akkumulator nach Anspruch 1, **dadurch gekennzeichnet, dass** die positive Elektrode aus mindestens einem schwefelhaltigen Material besteht, das aus der Gruppe ausgewählt ist, die elementaren Schwefel; Lithiumsulfid (Li₂S); Lithiumpolysulfide der allgemeinen Formel Li₂Sₙ, wobei n zwischen 2 und 8 beträgt; organische Polysulfide der allgemeinen Formel R₂Sₙ, worin R eine lineare Alkylkette ist, die 2 bis 10 Kohlenstoffatome umfassen kann, und n zwischen 2 und 50 beträgt; Organoschwefelverbindungen des Typs Poly(Kohlenstoffdisulfid); sowie jedes Disulfidpolymer enthält, das eine S-S-Verbindungsverkettung aufweist, die beim Entladungszyklus des Li/S-Akkumulators aufgebrochen und beim Ladungszyklus wieder gebildet werden kann.

3. Lithium/Schwefel-Akkumulator nach einem der vorhergehenden Ansprüche, **dadurch gekennzeichnet, dass** die negative Elektrode mindestens ein aktives Material umfasst, das aus der Gruppe ausgewählt ist, die Lithiummetall, Li-thiummetalllegierungen, Lithiumeinlagerungsverbindungen umfasst.

4. Lithium/Schwefel-Akkumulator nach einem der vorhergehenden Ansprüche, **dadurch gekennzeichnet, dass** das Lithiumsalz des Elektrolyten aus der Gruppe ausgewählt ist, die LiN(CF₃SO₂)₂; LiCF₃SO₃; LiClO₄; LiAsF₆, LiPF₆;LiBF₄; LiI, LiB(C₂O₄)₂; LiN(CF₃CF₂SO₂)₂; LiNO₃ oder LiOH umfasst.

5. Lithium/Schwefel-Akkumulator nach einem der vorhergehenden Ansprüche, **dadurch gekennzeichnet, dass** die eingeführte Elektrolytüberschussmenge zwischen 50 und 100% gegenüber der Elektrolytmenge darstellt, die die Benetzung der Elektroden und des Separators sicherstellt.

6. Lithium/Schwefel-Akkumulator nach Anspruch 1, **dadurch gekennzeichnet, dass** der Elektrolyt mindestens ein Lösungsmittel umfasst, das aus der Gruppe ausgewählt ist, die umfasst:
- Carbonate des Typs Propylencarbonat, Dimethylcarbonat, Ethylencarbonat und Diethylcarbonat;
- Ether des Typs 1,3-Dioxolan, Tetrahydrofuran, 1,2-Dimethoxyethan oder allgemeiner die Familie der Glyme der Formel CH₃O-(CH₂CH₂O)ₙ-CH₃, wobei n zwischen 1 und 10 beträgt, wie etwa Polyethylenglycoldimethyl-ether;
- Wasser.

7. Lithium/Schwefel-Akkumulator nach einem der vorhergehenden Ansprüche, **dadurch gekennzeichnet, dass** das Material eine Porosität zwischen 50 und 90% aufweist.

8. Lithium/Schwefel-Akkumulator nach einem der vorhergehenden Ansprüche, **dadurch gekennzeichnet, dass** das Material eine Dicke zwischen 50 und 100 Mikrometer aufweist.

9. Lithium/Schwefel-Akkumulator nach einem der vorhergehenden Ansprüche, **dadurch gekennzeichnet, dass** das Vlies Fasern umfasst, die aus der Gruppe ausgewählt sind, die Fasern aus Glas; Poly(ethylenterephthalat); Polyolefinen wie etwa Polypropylen und Polyethylen; Poly(vinylalkohol); Polyamid; Poly(tetrafluorethylen); Poly(vinylchlorid); Polyvinylidenfluorid; und ihre Gemische umfasst.

## Claims

1. A lithium/sulphur accumulator comprising at least one unit cell comprising:
- a negative electrode;
- an electrode separator comprising a material soaked with electrolyte, said material comprising at least one nonwoven and having a porosity in the range from 50 to 96%, and a thickness in the range from 50 to 200 micrometers;
- a positive electrode;
said electrolyte being introduced by an excess quantity, and comprising at least one lithium salt, the excess quantity of electrolyte amounting to from 20 to 200 % of the quantity of electrolyte ensuring the wetting of the electrodes and of the separator.

2. The lithium/sulphur accumulator of claim 1, ***characterized* in that** the positive electrode is made of at least one sulphur material selected from the group comprising elemental sulphur; lithium sulfide (Li₂S); lithium polysulfides of general formula Li₂Sₙ, n being in the range from 2 to 8; organic polysulfides of general formula R₂Sₙ, where R is a linear alkyl chain capable of comprising from 2 to 10 carbon atoms, and n is in the range from 2 to 50; organosulphur compounds of the type poly(carbon disulfide); as well as any disulfide polymer having a chaining of S-S bonds capable of being broken during the discharge cycle of the Li/S accumulator and formed back during the charge cycle.

3. The lithium/sulphur accumulator of any of the foregoing claims, ***characterized* in that** the negative electrode comprises at least one active material selected from the group comprising metal lithium, metal lithium alloys, lithium insertion compounds.

4. The lithium/sulphur accumulator of any of the foregoing claims, ***characterized* in that** the lithium salt of the electrolyte is selected from the group comprising LiN(CF₃SO₂)₂; LiCF₃SO₃; LiClO₄; LiAsF₆; LiPF₆; LiBF₄; LiI; LiB(C₂O₄)₂; LiN(CF₃CF₂SO₂)₂; LiNO₃; or LiOH.

5. The lithium/sulphur accumulator of any of the foregoing claims, ***characterized* in that** the excess quantity of electrolyte amounts to between 50 and 100 % of the quantity of electrolyte ensuring the wetting of the electrodes and of the separator.

6. The lithium/sulphur accumulator of claim 1, ***characterized* in that** the electrolyte comprises at least one solvent selected from the group comprising:
- carbonates such as propylene carbonate, dimethyl carbonate, ethylene carbonate, and diethyl carbonate;
- ethers such as 1,3-dioxolane, tetrahydrofurane, 1,2-dimethoxyethane or more generally the family of glymes of formula CH₃O-(CH₂CH₂O)ₙ-CH₃, n being in the range from 1 to 10, such as polyethylene glycol dimethyl ether;
- water.

7. The lithium/sulphur accumulator of any of the foregoing claims, ***characterized* in that** the material has a porosity in the range from 50 to 90 %.

8. The lithium/sulphur accumulator of any of the foregoing claims, ***characterized* in that** the material has a thickness in the range from 50 to 100 micrometers.

9. The lithium/sulphur accumulator of any of the foregoing claims, ***characterized* in that** the nonwoven comprises fibers selected from the group comprising fibers of glass; of poly(ethylene terephthalate); of polyolefins such as polypropylene and polyethylene; of poly(vinyl alcohol); of polyamide; of poly(tetrafluoroethylene); of poly(vinyl chloride); of polyvinylidene fluoride; and mixtures thereof.
